# EUROPEAN PATENT APPLICATION

(11) **EP 1 164 517 A1**
(43) Date of publication of application: **19.12.2001**
(21) Application number: 00112719.0
(22) Date of filing: 15.06.2000
(51) Int. Cl.: G06F 17/60

(54) **Real-time network personality analysis method and system**

(71) Applicant: PCYI Network Corporation, Taipei (TW)
(72) Inventor: Chen, Chin-min, Taipei (TW)
(74) Representative: TER MEER STEINMEISTER & PARTNER GbR

(57) **Abstract**

A real-time network personality analysis system which operates when a first user and a second user are simultaneously connected through a network, and comprises a storage device, a personality analysis module and an output device. The storage device stores basic data of the second user, the personality analysis module performs a personality analysis on the second user, and the output device provides the personality analysis of the second user to the first user for his reference when they are connected through a network. The invention also discloses a corresponding real-time network personality analysis method.

## Description

### BACKGROUND OF THE INVENTION

### Field of Invention

The invention relates to a real-time network personality analysis method and its corresponding system.

### Related Art

Along with the advance in modern technologies, information exchange and transmission have become faster and communication among people has become more convenient. Through many different types of networks such as the Internet or the telephone network, people are in contact with one another at greater speeds than ever before thus, communication speed has greatly increased.

Nevertheless, as the information exchange and transmission become faster, people spend so much time processing information and messages that the time spent thinking while communicating with others has become less. For example, two people living in different places contacted each other by mail or telephone in times past. Communication was greatly limited by time and space, thus people had more time to prepare their messages. Nowadays, people can communicate through a multitude of ways such as wired telephone networks, wireless telephone networks and the Internet. Since there are fewer limits in time and space, one individual can communicate with another individual at any time or even with a multiple of people at the same time. Thus, the frequency of communication results in less time for thinking and preparing for such communication.

Therefore, both parties may not fully understand each other nor analyze the contents in detail. That is, communication cannot achieve the expected goals and effects. Thus, how to provide analysis and assistance during communication and to increase the quality and efficiency of communication has become an urgent problem to be solved.

### SUMMARY OF THE INVENTION

In view of the foregoing, it is an object of the invention to provide a real-time network personality analysis method and a corresponding system, which can perform personality analyses according to basic data of both parties when they are connected to a network so as to increase communication efficiency.

To achieve the above objective, the real-time network personality analysis method of the invention comprises a connection step, a data retrieval step, a personality analysis step and an output step. The connection step builds the connections of a first user and a second user. The data retrieval step obtains the basic data of the second user. The personality analysis step performs a personal analysis on the second user. The output step provides the personality analysis result to the first user for his reference when both the first and second users are in network connection.

Another aspect of the invention is a real-time network personality analysis system, which comprises a storage device, a personality analysis module and an output device. The storage device stores basic data of the second user. The personality analysis module performs a personality analysis on the second user. The output device provides the personality analysis of the second user to the first user for his reference when both the first and second users are in network connection.

Since using the real-time network personality analysis method and the corresponding system of the invention can perform a real-time personality analysis on the second user, it therefore can help the first user in fully understanding and analyzing the second user, greatly increasing the quality and efficiency of communication. The invention can solve the problem of being unable to achieve the expected effects during communication using the prior art.

### BRIEF DESCRIPTION OF THE DRAWINGS

The invention is described in greater detail hereinafter relative to non-limitative embodiments and the attached drawings, wherein there is shown:
FIG. **1** is a schematic view showing a preferred embodiment structure of the real-time network personality analysis system according to the invention;
FIG. **2** is a flow chart showing a preferred embodiment of the real-time network personality analysis method according to the invention; and
FIG. **3** is a schematic view showing an example of the image shown on the user screen according to a preferred embodiment of the real-time network personality analysis method and its corresponding system of the invention.

In the various drawings, the same references relate to the same elements.

### DETAILED DESCRIPTION OF THE INVENTION

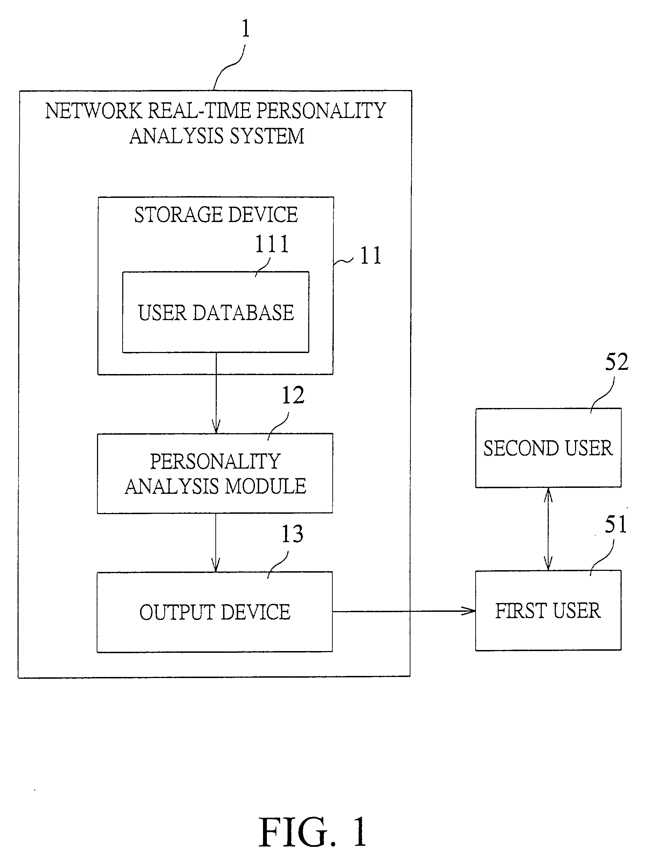

As shown in FIG. **1,** a preferred embodiment of the real-time network personality analysis system **1** of the invention coupling a first user **51** and a second user **52** comprises a storage device **11,** a personality analysis module **12** and an output device **13.** The storage device **11** stores a user database **111** containing at least the basic data of the second user **52** such as the name, gender, age and even an image or voice. Of course, the user database **111** can also stores the basic data of the first user **51** if necessary.

The first user **51** can store the basic data of the second user **52** in the user database **111** so that the basic data of the second user **52** can be retrieved therefrom. For example, if the first user **51** already knows of the basic data of his friend, he can enter his friend's basic data into the user database **111**. When the second user **52** is connected to the same network, the first user **51** can identify his friend and he can directly obtain the basic data of the second user **52** from the user database **111.** Another example is that when the first user **51** is connected to the network at the same time as the second user **52,** the newly obtained basic data of the second user **52** that are not in the user database **111** can be entered into the user database **111** in real time by the first user **51.** This makes the recorded data in the user database **111** more complete.

Moreover, the second user **52** can register his basic data in the user database **111.** When the first user **51** and the second user **52** are connected to the network at the same time, the first user **51** can directly obtain the basic data registered by the second user **52** from the user database **111** if the second user **52** is willing to disclose all or part of the basic data.

It should be noted that there might simultaneously be two sets of basic data on the second user **52** in the user database **111,** wherein one is established by the first user **51** while the other by the second user **52.** This situation is commonly seen in websites requiring membership. The first user **51** and the second user **52** are members and register their basic data. The first user **51** further registers the basic data of the second user **52** in the personal address book of the first user. Therefore, there exists two sets of basic data on the second user **52** in the user database **111.** In this circumstance, the real-time network personality analysis system of the invention does not need to store the two sets of different basic data on the second user **52** in the same storage device **11.** That is, different basic data can be stored in two storage devices **11** according to need without conflicting with the spirit of the invention. Furthermore, when two sets of basic data of the second user **52** exist, it may be determined by the real-time network personality analysis system **1** or the settings of the first user **51** that decides which one is used as the basic data for the analysis.

After obtaining the basic data of the second user **52,** the personality analysis module **12** performs a personality analysis on the second user **52** based upon the obtained basic data. For example, the personality analysis module **12** can provide the second user's possible personalities using a horoscope according to his birthday, or predict his fortune according to name analysis. The personality analysis module **12** of the real-time network personality analysis system of the invention, nevertheless, is not limited to the personality analyses using a horoscope or name. For example, it can also perform the personality analyses through mental analyses.

When the first user **51** and the second user **52** are connected through a network, the personality analysis result is provided to the first user **51** for his reference. This can help the first user **51** in understanding and analyzing the second user **52** so as to increase the quality and efficiency of the communication.

It should be understood that in the real-time network personality analysis system of the invention, the storage device, the personality analysis module and the output device can have different structures according to practical needs. For instance, if the first user uses a personal computer to build up the network connection with the second user and the personality analysis module and the output device are installed within a fortune-telling server, then the storage device can be installed within the personal computer or the fortune-telling server. In other words, the basic data of the second user can be stored in the personal computer or the fortune-telling server without conflicting with the spirit of the invention.

Furthermore, the storage device can be any device that can store information. For example, if the real-time network personality analysis system of the invention is applied to a server or a personal computer, the storage device can be a disk drive or random access memory (RAM). If it is applied to a mobile phone, the storage device can be a flash ROM.

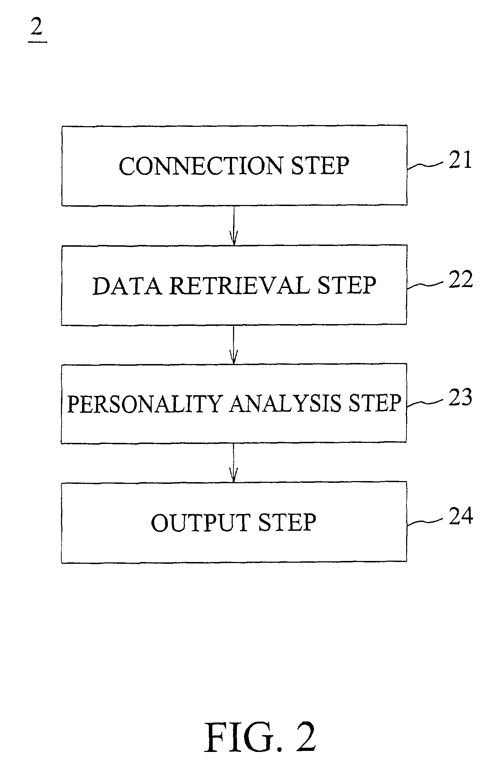

Referring to FIG. **2,** a preferred embodiment of the real-time network personality analysis method **2** according to the invention comprises a connection step **21,** a data retrieval step **22,** a personality analysis step **23** and an output step **24.** A first user establishes a network connection with a second user in the connection step **21.** The basic data of the second user is obtained in the data retrieval step **22.** The personality analysis step **23** performs a personal analysis on the second user. Finally, the output step **24** provides the personality analysis result to the first user for his reference.

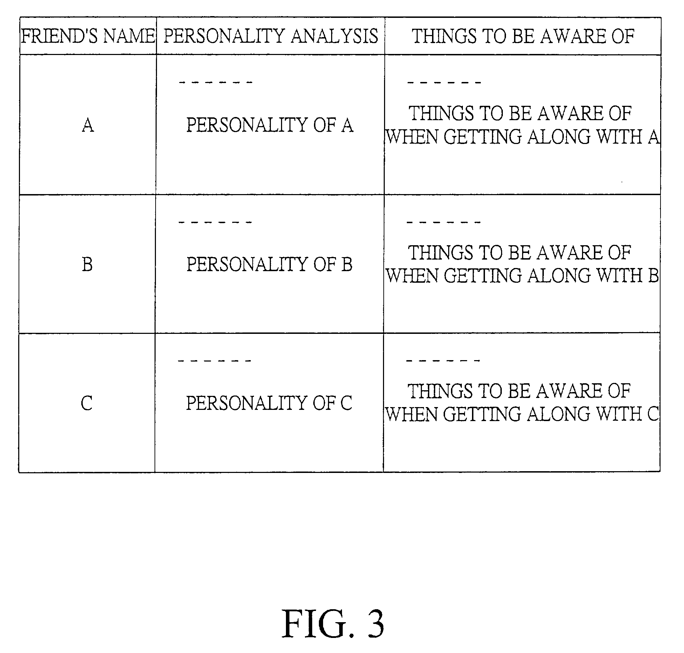

With reference to FIG. **3,** the network real-time personality analysis system and the corresponding method of the invention can perform personality analyses on a plurality of users in real time. They can also compare both users in order to provide the personality differences between them. In FIG. **3,** the first column lists the name or code of three users A, B and C. The second column lists the personality analysis results for the users A, B and C using the fortune-telling methods such as the horoscope or the name analysis. The third column provides the personality differences between the first user and the users A, B and C and things that the different users should be aware of, respectively.

When the first user holds a videoconference with three second users A, B and C simultaneously via the Internet, a screen as in FIG. **3** can be simultaneously shown on the computer monitor of the first user. That is, the personality analyses of the second users are provided to the first user for his reference. Of course, the number of users or columns can increase and is not limited to those shown in FIG. **3.**

As described hereinbefore, in the real-time network personality analysis method and the corresponding system, images or voices can be considered as the basic data of the second user so that they can be analyzed for a personality analyses on the second user. For instance, if the first user and the second user are in a videoconference, the image of the second user can be obtained. The personality or fate of the second user is determined from the relative positions of the eyes, nose, mouth, ear and cheek, the shape of eyebrows or eye positions according to physiognomy. The result is given to the first user immediately.

Since the real-time network personality analysis method and its corresponding system of the invention can perform real-time analysis on the second user, it can therefore provide the first user a better understanding and analysis of the second user when they are communicating, which greatly increases the quality and efficiency of communications. The invention can solve the problem of being unable to achieve the expected effects during communications using the prior art.

The real-time network personality analysis method and its corresponding system of the invention can be incorporated into a multitude of current communication methods and systems such as mobile phones, net phones or videoconference systems. Therefore, they are of great industrial value.

The real-time network personality analysis method and its corresponding system of the invention are very attractive to users from either the viewpoint of business negotiation or the viewpoint of increasing interrelationships. Therefore, they are of great commercial value.

From the invention being thus described, it will be obvious that the invention may be varied in many ways. Such variations are not to be regarded as a departure from the spirit and scope of the invention, and all such modifications as would be obvious to one skilled in the art are intended to be included within the scope of the following claims.

## Claims

1. A real-time network personality analysis system operating when a first user and a second user are connected through a network, which comprises:
a storage device for storing basic data of the second user;
a personality analysis module for performing a personality analysis according to the basic data of the second user; and
an output device for providing the personality analysis of the second user to the first user for his reference.

2. The system according to claim 1, wherein the basic data stored in the storage device is created by the first user before establishing a network connection with the second user.

3. The system according to claim 1, wherein the basic data stored in the storage device is created by the first user when connected through a network with the second user.

4. The system according to claim 1, wherein the basic data stored in the storage device is created by the second user.

5. The system according to claim 1, wherein the personality analysis module performs personality analyses by analyzing names.

6. The system according to claim 1, wherein the personality analysis module performs personality analyses according to a horoscope.

7. The system according to claim 1, wherein the storage device is a disk drive.

8. The system according to claim 1, wherein the storage device is a flash ROM.

9. A real-time network personality analysis method, which comprises:
a connection step for building up a connection between a first user and a second user;
a data retrieval step for obtaining basic data of the second user;
a personality analysis step for performing a personality analysis on the second user according to the basic data of the second user; and
an output step for providing the personality analysis result to the first user for his reference when both the first user and the second user are simultaneously connected through a network.

10. The method according to claim 9, wherein:
a data establishing step is implemented for building up the basic data of the second user in a user database before the connection step;
and
in the data retrieval step, the basic data of the second user is obtained from the user database.

11. The method according to claim 9, wherein:
a data establishing step is implemented for building up the basic data of the second user in a user database during the connection step;
and
in the data retrieval step, the basic data of the second user is obtained from the user database.

12. The method according to claim 9, wherein the basic data of the second user are obtained from the second user in the data retrieval step.

13. The method according to claim 9, wherein the personality analysis step performs personality analyses by analyzing names.

14. The method according to claim 9, wherein the personality analysis step performs personality analyses according to the horoscope.
